# EUROPÄISCHE PATENTANMELDUNG

(11) **EP 4 292 417 A1**
(43) Veröffentlichungstag der Anmeldung: **20.12.2023**
(21) Anmeldenummer: 22178714.6
(22) Anmeldetag: 13.06.2022
(51) Int. Cl.: A01D 34/00, A01D 75/18, A01D 34/74

(54) **VERFAHREN UND SYSTEM ZUM BETREIBEN EINES AUTONOMEN MOBILEN GRÜNFLÄCHENBEARBEITUNGSROBOTERS**

(71) Anmelder: Andreas Stihl AG & Co. KG, 71336 Waiblingen (DE)
(72) Erfinder: WOLF, Philip, 6341 Ebbs (AT); RIEGER, Alexander, 83115 Neubeuern (DE); RITZER, Peter, 6341 Ebbs (AT); BIECHL, Alexander, 6330 Kufstein (AT)
(74) Vertreter: Patentanwälte Ruff, Wilhelm, Beier, Dauster & Partner mbB

(57) **Zusammenfassung**

Die Erfindung bezieht sich auf ein Verfahren zum Betreiben eines autonomen mobilen Grünflächenbearbeitungsroboters (1), wobei der Grünflächenbearbeitungsroboter (1) ein Bearbeitungswerkzeug (2) aufweist, wobei eine Bearbeitungshöhe (2H) des Bearbeitungswerkzeugs (2) verstellbar ist, wobei das Verfahren die Schritte aufweist:
a) Überwachen, ob ein Festhäng-Kriterium (FK) erfüllt ist, wobei das Festhäng-Kriterium (FK) für ein Festhängen, insbesondere eines Berührungsteils (3a, 3b), insbesondere des Bearbeitungswerkzeugs (2), des Grünflächenbearbeitungsroboters (1) charakteristisch ist, und
b) falls das Festhäng-Kriterium (FK) erfüllt ist, Vergrößern der Bearbeitungshöhe (2H).

## Beschreibung

### ANWENDUNGSGEBIET UND STAND DER TECHNIK

Die Erfindung bezieht sich auf ein Verfahren und ein System, insbesondere jeweils, zum Betreiben eines autonomen mobilen Grünflächenbearbeitungsroboters.

### AUFGABE UND LÖSUNG

Der Erfindung liegt als Aufgabe die Bereitstellung eines Verfahrens und eines Systems, insbesondere jeweils, zum Betreiben eines autonomen mobilen Grünflächenbearbeitungsroboters zugrunde, das verbesserte Eigenschaften aufweist.

Die Erfindung löst diese Aufgabe durch die Bereitstellung eines Verfahrens und eines Systems beschrieben in den unabhängigen Ansprüchen. Vorteilhafte Weiterbildungen und/oder Ausgestaltungen der Erfindung sind in den abhängigen Ansprüchen beschrieben.

Das erfindungsgemäße Verfahren ist zum Betreiben eines autonomen mobilen Grünflächenbearbeitungsroboters. Der Grünflächenbearbeitungsroboter weist ein Bearbeitungswerkzeug auf. Eine Bearbeitungshöhe, insbesondere ein Wert der Bearbeitungshöhe, des Bearbeitungswerkzeugs ist verstellbar. Das Verfahren weist die Schritte aufweist: a) Überwachen, ob, insbesondere mindestens oder nur, ein, insbesondere einziges, Festhäng-Kriterium erfüllt ist. Das Festhäng-Kriterium ist für ein Festhängen, insbesondere eines Berührungsteils, insbesondere des Bearbeitungswerkzeugs, des Grünflächenbearbeitungsroboters, insbesondere an einem Hindernis, charakteristisch. b) falls, insbesondere mindestens oder nur, das Festhäng-Kriterium erfüllt ist, Vergrößern der Bearbeitungshöhe.

Dies, insbesondere das Vergrößern der Bearbeitungserhöhe, ermöglicht das Festhängen zu lösen und somit ein Befreien des Grünflächenbearbeitungsroboters, insbesondere ohne einen Nutzer.

Insbesondere können das Verfahren, das Betreiben, das Überwachen und das Vergrößern automatisch sein.

Der Grünflächenbearbeitungsroboter kann elektrisch sein.

Autonomer mobiler Grünflächenbearbeitungsroboter kann bedeuten, dass der Grünflächenbearbeitungsroboter dazu ausgebildet sein kann, sich automatisch bzw. selbstständig bzw. selbstgesteuert und/oder unabhängig von dem Nutzer, insbesondere auf einer Grünfläche, die vorgegeben und/oder begrenzt sein kann, fortzubewegen und/oder automatisch bzw. selbstständig bzw. selbstgesteuert und/oder unabhängig von dem Nutzer, insbesondere die Grünfläche, zu bearbeiten, insbesondere das Bearbeiten bzw. die Bearbeitung zu beginnen und/oder zu beenden.

Der Begriff "konfiguriert" kann für den Begriff "ausgebildet" synonym verwendet werden.

Die Grünfläche kann eine Wiese sein.

Das Bearbeitungswerkzeug kann zu einer Bearbeitung der Grünfläche ausgebildet sein.

Das Berührungsteil und/oder das Bearbeitungswerkzeug können/kann an einer Unterseite des Grünflächenbearbeitungsroboters angeordnet sein.

Angeordnet kann räumlich angeordnet sein.

Der Begriff "umfasst/en" oder "hat/haben" kann für den Begriff "aufweist/en" synonym verwendet werden.

Das Bearbeitungswerkzeug kann ein Schneidwerkzeug sein. Insbesondere kann die Bearbeitungshöhe eine Schnitthöhe sein.

Der Begriff "Werkzeughöhe" kann für den Begriff "Bearbeitungshöhe" synonym verwendet werden.

Der Grünflächenbearbeitungsroboter kann eine Fahrebene aufweisen bzw. definieren, wobei die Bearbeitungshöhe über der Fahrebene sein kann.

Verstellbar kann in mindestens drei Stufen oder stufenlos verstellbar sein.

Der Begriff "Erkennen" kann für den Begriff "Überwachen" synonym verwendet werden.

Der Begriff "Feststeck/en" oder "Festfahr/en" kann für den Begriff "Festhäng/en" synonym verwendet werden.

Das Festhäng-Kriterium kann vorgegeben sein, insbesondere werksseitig.

Das Festhäng-Kriterium kann ein Hindernisberührungs-Kriterium sein, wobei das Hindernisberührungs-Kriterium für eine Hindernisberührung, insbesondere des Berührungsteils, insbesondere des Bearbeitungswerkzeugs, des Grünflächenbearbeitungsroboters, insbesondere von bzw. mit dem Hindernis, charakteristisch sein kann.

Das Hindernis kann ein Hügel sein.

Der Begriff "Berührungselement" kann für den Begriff "Berührungsteil" synonym verwendet werden.

Der Begriff "kennzeichnend" kann für den Begriff "charakteristisch" synonym verwendet werden.

Die Formulierung "Anheben des Bearbeitungswerkzeugs" kann für die Formulierung "Vergrößern der Bearbeitungshöhe" synonym verwendet werden.

Das Vergrößern der Bearbeitungshöhe kann maximal sein.

Falls das Festhäng-Kriterium nicht, insbesondere mehr, erfüllt ist, braucht oder kann nicht die Bearbeitungshöhe vergrößert werden, insbesondere kann verkleinert werden.

Das Überwachen und/oder das Vergrößern können/kann mittels des Grünflächenbearbeitungsroboters ausgeführt werden. Insbesondere kann das Überwachen mittels, insbesondere mindestens, eines, insbesondere elektrischen, Sensors des Grünflächenbearbeitungsroboters ausgeführt werden. Zusätzlich oder alternativ kann das Vergrößern mittels eines, insbesondere elektrischen, Höhenverstellungsantriebssystems des Grünflächenbearbeitungsroboters ausgeführt werden. Insbesondere können der Sensor und das Höhenverstellungsantriebssystem verschieden sein, insbesondere voneinander unabhängig.

Der Schritt a) kann, insbesondere mehrfach, wiederholt und/oder kontinuierlich ausgeführt werden.

Der Schritt b) kann zeitlich nach dem Schritt a) ausgeführt werden.

In einer Weiterbildung der Erfindung weist der Grünflächenbearbeitungsroboter ein Fortbewegungswerk, insbesondere ein Fahrwerk, auf. Das Fortbewegungswerk ist zu einer Fortbewegung, insbesondere einer Fahrbewegung, des Grünflächenbearbeitungsroboters ausgebildet, insbesondere in einer Fortbewegungsrichtung. Das Berührungsteil ist zu einer Überwachungsbewegung, insbesondere entgegen der Fortbewegungsrichtung, verursacht durch die Fortbewegung, insbesondere in der Fortbewegungsrichtung, und das Festhängen ausgebildet und gegenüber dem Fortbewegungswerk beweglich, insbesondere verschiebbar, gelagert. Das Festhäng-Kriterium ist, dass die Überwachungsbewegung verursacht wird, insbesondere mit einem Mindestwert bzw. -maß. Dies ermöglicht ein besonders gutes Überwachen des Festhängens. Insbesondere kann das Fortbewegungswerk die Fahrebene aufweisen bzw. definieren. Zusätzlich oder alternativ kann der Begriff "bewirkt" für den Begriff "verursacht" synonym verwendet werden. Weiter zusätzlich oder alternativ kann die Formulierung "in Bezug auf" für den Begriff "gegenüber" synonym verwendet werden.

In einer Weiterbildung der Erfindung weist der Grünflächenbearbeitungsroboter ein Fortbewegungsantriebssystem, insbesondere ein Fahrantriebssystem, auf. Das Fortbewegungsantriebssystem ist zu, insbesondere einem Antrieb, einer Fortbewegung, insbesondere einer Fahrbewegung, des Grünflächenbearbeitungsroboters ausgebildet, insbesondere auf der Grünfläche. Das Festhäng-Kriterium ist, dass trotz Betriebs des Fortbewegungsantriebssystems der Grünflächenbearbeitungsroboter sich nicht wie bei Nicht-Festhängen, insbesondere Hindernisfreiheit, insbesondere gar nicht, fortbewegt, insbesondere fährt. Dies ermöglicht ein besonders gutes Überwachen des Festhängens. Insbesondere kann das Fortbewegungsantriebssystem elektrisch und/oder ein Motorantriebssystem sein. Zusätzlich oder alternativ kann die Fortbewegung automatisch sein. Weiter zusätzlich oder alternativ kann der Begriff "Betreiben" für den Begriff "Betrieb" synonym verwendet werden. Weiter zusätzlich oder alternativ kann trotz Betriebs bedeuten, trotz eines, insbesondere maximalen, Antriebsmoments größer Null und/oder eines das Antriebsmoment verursachenden, insbesondere maximalen, Antriebsstroms größer Null. Weiter zusätzlich oder alternativ kann nicht fortbewegen wie bei Nicht-Festhängen und/oder, insbesondere wenigstens zweimal, insbesondere wenigstens viermal, langsamer, insbesondere als Soll bzw. erwartet, bedeuten. Weiter zusätzlich oder alternativ kann der Sensor von dem Fortbewegungsantriebssystem unabhängig sein.

In einer Ausgestaltung der Erfindung weist das Überwachen bzw. der Schritt a) auf: Erfassen der Fortbewegung und/oder der Nicht-Fortbewegung mittels Bestimmens einer und/oder keiner Abstands-, Positions- und/oder Wegstreckenveränderung des Grünflächenbearbeitungsroboters und/oder mittels Magnetfeldmessens, insbesondere globalen und/oder lokalen, Positionsbestimmens, insbesondere visueller, Odometrie und/oder Neigungsmessens und/oder inertialer Navigation, insbesondere Beschleunigungsmessens und/oder Drehratemessens. Dies ermöglicht ein besonders gutes Überwachen der Fortbewegung und/oder der Nicht-Fortbewegung. Insbesondere kann das Erfassen automatisch sein. Zusätzlich oder alternativ kann der Begriff "Detektieren" für den Begriff "Erfassen" synonym verwendet werden. Weiter zusätzlich oder alternativ kann die Abstandsveränderung gegenüber einem, insbesondere immobilen, Objekt, wie z.B. einer Wand, sein und/oder das Bestimmen der und/oder keiner Abstandsveränderung kann mittels Ultraschalls sein. Weiter zusätzlich oder alternativ kann die Abstandsveränderung gegenüber einem Begrenzungsdraht sein und/oder das Magnetfeldmessen kann ein Messen eines Magnetfelds, insbesondere einer Amplitude und/oder einer Phase des Magnetfelds, verursacht durch einen elektrischen Strom fließend durch den Begrenzungsdraht sein. Weiter zusätzlich oder alternativ kann das globale Positionsbestimmen mittels eines GNSS, insbesondere eines globalen Navigationssatellitensystems, sein. Weiter zusätzlich oder alternativ kann der Begriff "Trägheitsnavigation" für den Begriff "inertiale Navigation" synonym verwendet werden.

In einer Weiterbildung der Erfindung ist das Bearbeitungswerkzeug, insbesondere rotatorisch, bewegbar, insbesondere zu einer Bearbeitung der Grünfläche. Der Schritt b) weist auf: falls, insbesondere mindestens oder nur, das Festhäng-Kriterium erfüllt ist, Beenden einer Bewegung des Bearbeitungswerkzeugs. Insbesondere weist der Grünflächenbearbeitungsroboter ein Werkzeugbewegungsantriebssystem auf. Das Werkzeugbewegungsantriebssystem ist zu, insbesondere einem Antrieb, der Bewegung des Bearbeitungswerkzeugs ausgebildet. Der Schritt b) weist auf: falls, insbesondere mindestens oder nur, das Festhäng-Kriterium erfüllt ist, Beenden eines Betriebs des Werkzeugbewegungsantriebssystems. Dies ermöglicht die Situation, insbesondere das Festhängen, nicht noch zu verschlechtern und/oder Energie zu sparen. Insbesondere kann das Bearbeitungswerkzeug zu der Bewegung, insbesondere zu der Rotation, im Wesentlichen bzw. etwa, insbesondere genau, parallel zu der Fahrebene ausgebildet sein. Zusätzlich oder alternativ kann das Beenden automatisch sein. Weiter zusätzlich oder alternativ kann der Begriff "Deaktivieren" oder "Ausschalten" für den Begriff "Beenden" synonym verwendet werden. Weiter zusätzlich oder alternativ kann das Werkzeugbewegungsantriebssystem elektrisch und/oder ein Motorantriebssystem sein. Weiter zusätzlich oder alternativ braucht oder kann nicht die Bewegung beendet werden, insbesondere kann begonnen werden, falls das Festhäng-Kriterium nicht, insbesondere mehr, erfüllt ist.

In einer Weiterbildung, insbesondere einer Ausgestaltung, der Erfindung weist der Grünflächenbearbeitungsroboter ein Fortbewegungsantriebssystem, insbesondere ein Fahrantriebssystem, auf. Das Fortbewegungsantriebssystem ist zu, insbesondere einem Antrieb, einer Fortbewegung, insbesondere einer Fahrbewegung, des Grünflächenbearbeitungsroboters ausgebildet, insbesondere auf der Grünfläche. Der Schritt b) weist auf: Betreiben des Fortbewegungsantriebssystems zu der Fortbewegung, insbesondere in abgewandter, insbesondere entgegengesetzter, Fortbewegungsrichtung, des Grünflächenbearbeitungsroboters, insbesondere zeitlich nach dem Vergrößern der Bearbeitungshöhe, insbesondere und dem Beenden der Bewegung des Bearbeitungswerkzeugs, insbesondere dem Beenden des Betriebs des Werkzeugbewegungsantriebssystems. Insbesondere weist das Verfahren den Schritt auf: zeitlich nach dem Schritt b) Verkleinern der Bearbeitungshöhe, insbesondere und Beginnen der Bewegung des Bearbeitungswerkzeugs, insbesondere Beginnen des Betriebs des Werkzeugbewegungsantriebssystems, insbesondere falls, insbesondere mindestens oder nur, ein, insbesondere einziges, Rückfall-Kriterium erfüllt ist. Dies, insbesondere das Betreiben des Fortbewegungsantriebssystems, ermöglicht das Festhängen zu lösen und/oder ein erneutes Festhängen zu vermeiden. Insbesondere kann das Fortbewegungsantriebssystem elektrisch und/oder ein Motorantriebssystem sein. Zusätzlich oder alternativ können/kann die Fortbewegung, das Betreiben, das Verkleinern und/oder das Beginnen automatisch sein. Weiter zusätzlich oder alternativ kann die Fortbewegungsrichtung abgewandt, insbesondere entgegengesetzt, zu einer Fortbewegungsrichtung zeitlich vor der Erfüllung des Festhäng-Kriteriums sein. Weiter zusätzlich oder alternativ kann der Schritt b) aufweisen: Betreiben des Fortbewegungsantriebssystems zu einer Drehung des Grünflächenbearbeitungsroboters in die abgewandte, insbesondere entgegengesetzte, Fortbewegungsrichtung. Weiter zusätzlich oder alternativ kann der Grünflächenbearbeitungsroboter mindestens ein angetriebenes Laufrad und mindestens ein nicht-angetriebenes Laufrad zu der Fahrbewegung des Grünflächenbearbeitungsroboters, insbesondere auf der Grünfläche, aufweisen. Mindestens das nicht-angetriebene Laufrad kann vor mindestens dem angetriebenen Laufrad in der Fortbewegungsrichtung angeordnet sein. Insbesondere kann vor in einer Vorzug- bzw. Hauptbewegungsrichtung des Grünflächenbearbeitungsroboters sein. Weiter zusätzlich oder alternativ kann die Fortbewegung in die Fortbewegungsrichtung eine Vorwärtsbewegung sein. Weiter zusätzlich oder alternativ braucht oder kann nicht der Grünflächenbearbeitungsroboter in abgewandter, insbesondere entgegengesetzter, Fortbewegungsrichtung fortbewegt werden, falls das Festhäng-Kriterium nicht erfüllt ist. Weiter zusätzlich oder alternativ kann das Rückfall-Kriterium vorgegeben sein, insbesondere werksseitig. Weiter zusätzlich oder alternativ kann das Rückfall-Kriterium sein, dass das Festhäng-Kriterium nicht erfüllt ist, insbesondere für eine Mindestzeitdauer. Weiter zusätzlich oder alternativ kann das Rückfall-Kriterium eine Erreichung und/oder eine Überschreitung einer Mindestfortbewegungszeitdauer und/oder einer Mindestfortbewegungswegstrecke der Fortbewegung sein. Insbesondere können/kann die Mindestfortbewegungszeitdauer und/oder die Mindestfortbewegungswegstrecke abhängig von einer Erstreckung des Grünflächenbearbeitungsroboters in die Fortbewegungsrichtung sein. Weiter zusätzlich oder alternativ kann das Verkleinern der Bearbeitungshöhe auf einen Wert wie zeitlich vor der Erfüllung des Festhäng-Kriteriums sein. Weiter zusätzlich oder alternativ kann die Formulierung "Absenken des Bearbeitungswerkzeugs" für die Formulierung "Verkleinern der Bearbeitungshöhe" synonym verwendet werden. Weiter zusätzlich oder alternativ kann der Begriff "Aktivieren" oder "Einschalten" für den Begriff "Beginnen" synonym verwendet werden.

In einer Weiterbildung, insbesondere einer Ausgestaltung, der Erfindung weist der Grünflächenbearbeitungsroboter eine Schutzeinrichtung auf. Die Schutzeinrichtung ist zu einem Schutz vor einem Eingriff in das Bearbeitungswerkzeug ausgebildet, insbesondere durch den Nutzer. Die Schutzeinrichtung weist das Berührungsteil auf, insbesondere ist das Berührungsteil. Zusätzlich oder alternativ ist eine Schutzhöhe, insbesondere ein Wert der Schutzhöhe, der Schutzeinrichtung verstellbar. Der Schritt b) weist auf: falls, insbesondere mindestens oder nur, das Festhäng-Kriterium erfüllt ist, Vergrößern der Schutzhöhe. Insbesondere weist das Verfahren den Schritt auf: zeitlich nach dem Schritt b) Verkleinern der Schutzhöhe, insbesondere falls, insbesondere mindestens oder nur, das Rückfall-Kriterium erfüllt ist. Dies, insbesondere das Vergrößern der Schutzhöhe, ermöglicht das Festhängen zu lösen. Insbesondere können/kann das Vergrößern und/oder das Verkleinern automatisch sein. Zusätzlich oder alternativ kann das Vergrößern der Schutzhöhe maximal sein. Weiter zusätzlich oder alternativ braucht oder kann nicht die Schutzhöhe vergrößert werden, insbesondere kann verkleinert werden, falls das Festhäng-Kriterium nicht, insbesondere mehr, erfüllt ist. Weiter zusätzlich oder alternativ kann das Verkleinern der Schutzhöhe auf einen Wert wie zeitlich vor der Erfüllung des Festhäng-Kriteriums sein. Weiter zusätzlich oder alternativ kann die Schutzhöhe über der Fahrebene sein. Weiter zusätzlich oder alternativ kann die Schutzeinrichtung einen, insbesondere nach unten ausgerichteten und/oder nach unten offenen, Kamm und/oder Käfig aufweisen, insbesondere sein. Insbesondere kann die Schutzhöhe eine Kamm- und/oder Käfighöhe, insbesondere einer Unterkante, des Kamms und/oder Käfigs sein. Weiter zusätzlich oder alternativ kann die Schutzeinrichtung ein, insbesondere nach unten ausgerichtetes und/oder nach unten offenes, Werkzeuggehäuse, insbesondere ein Mähdeckgehäuse, aufweisen, insbesondere sein. Insbesondere kann die Schutzhöhe eine Werkzeuggehäusehöhe, insbesondere einer Unterkante, des Werkzeuggehäuses sein.

In einer Weiterbildung, insbesondere einer Ausgestaltung, der Erfindung sind/ist die Bearbeitungshöhe und/oder die Schutzhöhe in einem Bereich von 0 cm (Zentimeter), insbesondere 2,5 cm, insbesondere 5 cm, bis 20 cm, insbesondere 15 cm, insbesondere 10 cm, verstellbar, insbesondere von der Grünfläche und/oder der Fahrebene aus.

In einer Weiterbildung, insbesondere einer Ausgestaltung, der Erfindung ist der Grünflächenbearbeitungsroboter derart ausgebildet, dass das Verstellen der Bearbeitungshöhe und/oder der Schutzhöhe unabhängig von einem Fortbewegen bzw. einer Fortbewegung des Grünflächenbearbeitungsroboters ist. Insbesondere weist der Grünflächenbearbeitungsroboter ein Fortbewegungsantriebssystem, insbesondere ein Fahrantriebssystem, auf. Das Fortbewegungsantriebssystem ist zu, insbesondere einem Antrieb, einer Fortbewegung, insbesondere einer Fahrbewegung, des Grünflächenbearbeitungsroboters ausgebildet, insbesondere auf der Grünfläche. Der Grünflächenbearbeitungsroboter weist ein Höhenverstellungsantriebssystem auf. Das Höhenverstellungsantriebssystem ist zu einer Verstellung bzw. dem Verstellen der Bearbeitungshöhe und/oder der Schutzhöhe ausgebildet. Das Höhenverstellungsantriebssystem ist von dem Fortbewegungsantriebssystem unabhängig. Insbesondere braucht oder kann nicht das Verstellen verursacht durch die Fortbewegung sein. Zusätzlich oder alternativ können/kann das Fortbewegungsantriebssystem und das Höhenverstellungsantriebssystem elektrisch und/oder ein Motorantriebssystem sein.

In einer Weiterbildung, insbesondere einer Ausgestaltung, der Erfindung sind/ist das Berührungsteil und/oder die Schutzeinrichtung vor dem Bearbeitungswerkzeug angeordnet.

In einer Weiterbildung, insbesondere einer Ausgestaltung, der Erfindung weist der Grünflächenbearbeitungsroboter ein Fortbewegungsgestell, insbesondere ein Fahrgestell, und/oder eine Abdeckhaube auf. Insbesondere sind/ist das Fortbewegungsgestell und/oder die Abdeckhaube, insbesondere mit einem Teil vor dem Berührungsteil und/oder dem Bearbeitungswerkzeug und/oder der Schutzeinrichtung, oberhalb des Berührungsteils und/oder des Bearbeitungswerkzeugs und/oder der Schutzeinrichtung angeordnet. Die Bearbeitungshöhe und/oder die Schutzhöhe sind/ist gegenüber dem Fortbewegungsgestell und/oder der Abdeckhaube verstellbar. Zusätzlich oder alternativ sind/ist das Fortbewegungsgestell und/oder die Abdeckhaube von dem Berührungsteil verschieden. Dies ermöglicht eine Beibehaltung eines Schutzes vor einem Eingriff in das Bearbeitungswerkzeug mittels des Fortbewegungsgestells und/oder der Abdeckhaube. Insbesondere kann der Begriff "Chassis" für den Begriff "Fahrgestell" synonym verwendet werden. Zusätzlich oder alternativ kann der Begriff "Schutzhaube" für den Begriff "Abdeckhaube" synonym verwendet werden. Weiter zusätzlich oder alternativ können/kann das Berührungsteil und/oder das Bearbeitungswerkzeug und/oder die Schutzeinrichtung an einer Unterseite des Fortbewegungsgestells und/oder der Abdeckhaube angeordnet sein. Weiter zusätzlich oder alternativ brauchen/braucht oder können/kann nicht eine Höhe des Fortbewegungsgestells und/oder eine Höhe der Abdeckhaube verstellbar sein.

In einer Weiterbildung, insbesondere einer Ausgestaltung, der Erfindung weist der Grünflächenbearbeitungsroboter ein Fortbewegungswerk, insbesondere ein Fahrwerk, und eine Abdeckhaube auf. Das Fortbewegungswerk ist zu einer Fortbewegung, insbesondere einer Fahrbewegung, des Grünflächenbearbeitungsroboters ausgebildet, insbesondere in einer Fortbewegungsrichtung. Die Abdeckhaube ist zu einer Haubenbewegung, insbesondere entgegen der Fortbewegungsrichtung, verursacht durch die Fortbewegung, insbesondere in der Fortbewegungsrichtung, und eine Haubenberührung ausgebildet und gegenüber dem Fortbewegungswerk beweglich, insbesondere verschiebbar, gelagert. Das Verfahren weist die Schritte auf: Überwachen, ob, insbesondere mindestens oder nur, ein, insbesondere einziges, Haubenbewegungs-Kriterium erfüllt ist. Das Haubenbewegungs-Kriterium ist, dass die Haubenbewegung verursacht wird, insbesondere mit einem Mindestwert bzw. -maß. Falls, insbesondere mindestens oder nur, das Haubenbewegungs-Kriterium erfüllt ist, Fortbewegen des Grünflächenbearbeitungsroboters in abgewandter, insbesondere entgegengesetzter, Fortbewegungsrichtung, insbesondere und nicht Vergrößern der Bearbeitungshöhe. Dies ermöglicht das Festhängen, wie z.B. an dem Hügel, und ein Anstoßen, wie z.B. an einer Wand, zu unterscheiden und somit unterschiedliche bzw. verschiedene Aktionen. Insbesondere kann die Haubenbewegung von der Überwachungsbewegung verschieden sein. Zusätzlich oder alternativ kann die Haubenberührung von dem Festhägen, insbesondere der Hindernisberührung, verschieden sein. Weiter zusätzlich oder alternativ kann das Haubenbewegungs-Kriterium von dem Festhäng-Kriterium, insbesondere dem Hindernisberührungs-Kriterium, verschieden sein. Weiter zusätzlich oder alternativ kann das Haubenbewegungs-Kriterium vorgegeben sein, insbesondere werksseitig. Weiter zusätzlich oder alternativ können/kann das Überwachen und/oder das Fortbewegen automatisch sein. Weiter zusätzlich oder alternativ braucht oder kann nicht die Bewegung des Bearbeitungswerkzeugs beendet werden, falls das Haubenbewegungs-Kriterium erfüllt ist.

Weiter zusätzlich oder alternativ braucht oder kann nicht der Grünflächenbearbeitungsroboter in abgewandter, insbesondere entgegengesetzter, Fortbewegungsrichtung fortbewegt werden, falls das Haubenbewegungs-Kriterium nicht erfüllt ist.

In einer Weiterbildung der Erfindung ist der Grünflächenbearbeitungsroboter ein Rasenmähroboter. Zusätzlich oder alternativ weist das Bearbeitungswerkzeug ein Rasenmähwerkzeug auf, insbesondere ist das Rasenmähwerkzeug. Weiter zusätzlich oder alternativ ist die Bearbeitungshöhe eine Rasenmähhöhe. Für einen derartigen Grünflächenbearbeitungsroboter kann das Verfahren besonders vorteilhaft sein. Insbesondere kann der Grünflächenbearbeitungsroboter ein Mulchmähroboter sein. Zusätzlich oder alternativ kann das Rasenmähwerkzeug mindestens einen Mähfaden, mindestens ein Kunststoffmesser, mindestens ein Metallmesser und/oder ein Metallschneideblatt mit mindestens einer Schneidkante und/oder mit mindestens einem Schneidezahn umfassen. Weiter zusätzlich oder alternativ kann das Rasenmähwerkzeug als ein rotierendes Rasenmähwerkzeug und dazu ausgebildet sein, ein zu mähendes Gut im sogenannten Freischnittverfahren ohne Gegenschneide zu mähen. Weiter zusätzlich oder alternativ kann das Rasenmähwerkzeug zum Mähen der Grünfläche ausgebildet sein. Weiter zusätzlich oder alternativ kann die Grünfläche ein Rasen sein.

Das erfindungsgemäße System ist zum Betreiben eines, insbesondere des, autonomen mobilen Grünflächenbearbeitungsroboters. Der Grünflächenbearbeitungsroboter weist ein, insbesondere das, Bearbeitungswerkzeug auf. Eine, insbesondere die, Bearbeitungshöhe des Bearbeitungswerkzeugs ist verstellbar. Das System weist eine Überwachungseinrichtung und eine Höhenverstellungseinrichtung, insbesondere und den Grünflächenbearbeitungsroboter, auf. Die Überwachungseinrichtung ist zum Überwachen ausgebildet, ob ein, insbesondere das, Festhäng-Kriterium erfüllt ist. Das Festhäng-Kriterium ist für ein, insbesondere das, Festhängen, insbesondere eines, insbesondere des, Berührungsteils, insbesondere des Bearbeitungswerkzeugs, des Grünflächenbearbeitungsroboters charakteristisch. Die Höhenverstellungseinrichtung ist, falls das Festhäng-Kriterium erfüllt ist, zum Vergrößern der Bearbeitungshöhe ausgebildet. Insbesondere weist der Grünflächenbearbeitungsroboter die Überwachungseinrichtung und/oder die Höhenverstellungseinrichtung auf.

Das System kann den/die gleichen Vorteil/e wie für das Verfahren vorhergehend genannt ermöglichen.

Insbesondere kann das System zum, insbesondere automatischen, Ausführen eines, insbesondere des, Verfahrens wie vorhergehend genannt ausgebildet sein. Zusätzlich oder alternativ kann das System ein Grünflächenbearbeitungssystem sein. Weiter zusätzlich oder alternativ können/kann das System, die Überwachungseinrichtung und/oder die Höhenverstellungseinrichtung elektrisch sein und/oder den Sensor und/oder eine Recheneinrichtung und/oder einen Prozessor und/oder einen Mikrocontroller und/oder eine Speichereinrichtung und/oder einen Computer aufweisen. Weiter zusätzlich oder alternativ kann der Grünflächenbearbeitungsroboter wie vorhergehend für das Verfahren genannt ausgebildet sein.

### KURZBESCHREIBUNG DER ZEICHNUNGEN

Weitere Vorteile und Aspekte der Erfindung ergeben sich aus den Ansprüchen und aus der Beschreibung von Ausführungsbeispielen der Erfindung, die nachfolgenden anhand der Figuren erläutert sind. Dabei zeigen:
- Fig. 1: eine Perspektivansicht eines erfindungsgemäßen Systems aufweisend einen autonomen mobilen Grünflächenbearbeitungsroboter aufweisend ein Bearbeitungswerkzeug,
- Fig. 2: eine geschnittene Seitenansicht des Systems der Fig. 1 und ein erfindungsgemäßes Verfahren zum Betreiben des autonomen mobilen Grünflächenbearbeitungsroboters,
- Fig. 3: eine geschnittene Seitenansicht des Systems der Fig. 1 und des Verfahrens der Fig. 2 bei einem Überwachen eines Festhängens des Grünflächenbearbeitungsroboters,
- Fig. 4: eine geschnittene Seitenansicht des Systems der Fig. 1 und des Verfahrens der Fig. 2 bei einem Vergrößern einer Bearbeitungshöhe des Bearbeitungswerkzeugs,
- Fig. 5: eine Draufsicht des Systems der Fig. 1 und des Verfahrens der Fig. 2 bei einem Fortbewegen in eine abgewandte Fortbewegungsrichtung des Grünflächenbearbeitungsroboters,
- Fig. 6: eine geschnittene Seitenansicht des Systems der Fig. 1 und des Verfahrens der Fig. 2 bei einem Verkleinern der Bearbeitungshöhe, und
- Fig. 7: eine Seitenansicht des Systems der Fig. 1 und des Verfahrens der Fig. 2 bei einem Überwachen einer Haubenbewegung und bei einem Fortbewegen in eine abgewandte Fortbewegungsrichtung des Grünflächenbearbeitungsroboters.

### DETAILLIERTE BESCHREIBUNG DER AUSFÜHRUNGSBEISPIELE

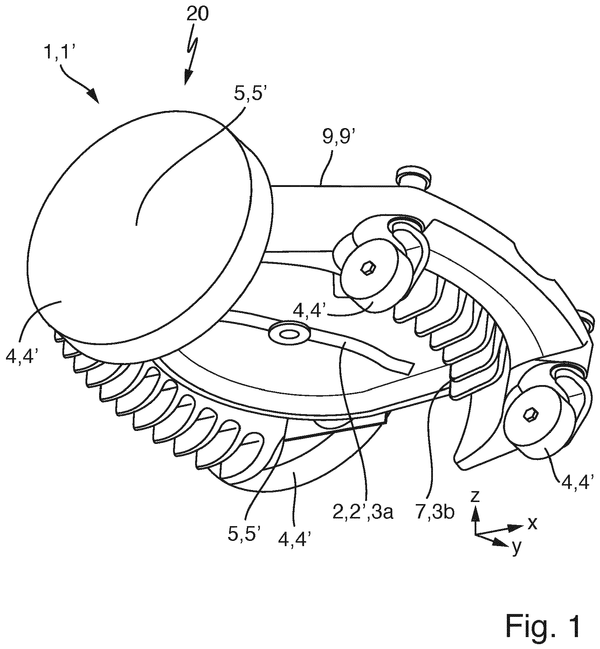

Fig. 1 bis 7 zeigen ein erfindungsgemäßes System 20 und ein erfindungsgemäßes Verfahren zum Betreiben eines autonomen mobilen Grünflächenbearbeitungsroboters 1.

Der Grünflächenbearbeitungsroboter 1 weist ein Bearbeitungswerkzeug 2 auf. Eine Bearbeitungshöhe 2H des Bearbeitungswerkzeugs 2 ist verstellbar.

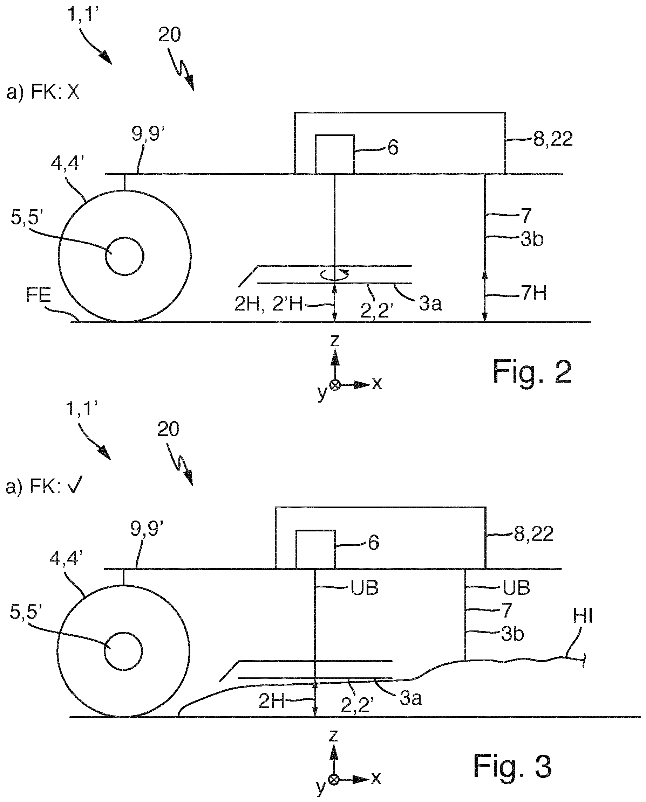

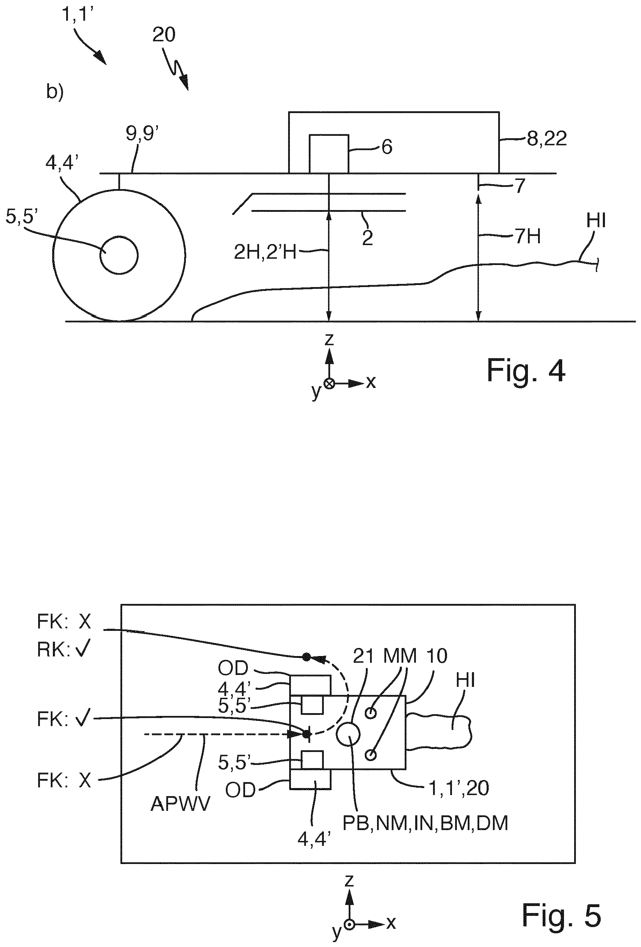

Das System 20 weist eine Überwachungseinrichtung 21 und eine Höhenverstellungseinrichtung 22, insbesondere und den Grünflächenbearbeitungsroboter 1, auf. Die Überwachungseinrichtung 21 ist zum Überwachen ausgebildet, ob ein Festhäng-Kriterium FK erfüllt ist, insbesondere überwacht, wie in Fig. 2 gezeigt. Das Festhäng-Kriterium FK ist für ein Festhängen, insbesondere eines Berührungsteils 3a, 3b, insbesondere des Bearbeitungswerkzeugs 2, des Grünflächenbearbeitungsroboters 1, insbesondere an einem Hindernis HI, charakteristisch, wie in Fig. 3 gezeigt. Die Höhenverstellungseinrichtung 22 ist, falls das Festhäng-Kriterium FK erfüllt ist, zum Vergrößern der Bearbeitungshöhe 2H ausgebildet, insbesondere vergrößert, wie in Fig. 4 gezeigt. Insbesondere weist der Grünflächenbearbeitungsroboter 1 die Überwachungseinrichtung 21 und/oder die Höhenverstellungseinrichtung 22 auf.

Das Verfahren weist die Schritte aufweist: a) Überwachen, ob das Festhäng-Kriterium FK erfüllt ist, insbesondere mittels der Überwachungseinrichtung 21. b) falls das Festhäng-Kriterium FK erfüllt ist, Vergrößern der Bearbeitungshöhe 2H, insbesondere mittels der Höhenverstellungseinrichtung 22.

Insbesondere weist der Grünflächenbearbeitungsroboter 1 eine Fahrebene FE auf, wobei die Bearbeitungshöhe 2H über der Fahrebene FE ist.

Im Detail weist der Grünflächenbearbeitungsroboter 1 ein Fortbewegungswerk 4, insbesondere ein Fahrwerk 4', auf. Das Fortbewegungswerk 4 ist zu einer Fortbewegung, insbesondere einer Fahrbewegung, des Grünflächenbearbeitungsroboters 1 ausgebildet, insbesondere bewegt fort.

Des Weiteren ist das Berührungsteil 3a, 3b zu einer Überwachungsbewegung UB verursacht durch die Fortbewegung und das Festhängen ausgebildet und gegenüber dem Fortbewegungswerk 4 beweglich gelagert. Das Festhäng-Kriterium FK ist, dass die Überwachungsbewegung UB verursacht wird, wie in Fig. 3 gezeigt.

Außerdem weist der Grünflächenbearbeitungsroboter 1 ein Fortbewegungsantriebssystem 5, insbesondere ein Fahrantriebssystem 5', auf. Das Fortbewegungsantriebssystem 5 ist zu der Fortbewegung, insbesondere der Fahrbewegung, des Grünflächenbearbeitungsroboters 1 ausgebildet, insbesondere bewegt fort.

Weiter ist das Festhäng-Kriterium FK, dass trotz Betriebs des Fortbewegungsantriebssystems 5 der Grünflächenbearbeitungsroboter 1 sich nicht wie bei Nicht-Festhängen, insbesondere gar nicht, fortbewegt, insbesondere fährt, wie in Fig. 3 gezeigt.

Im Detail weist das Überwachen auf: Erfassen der Fortbewegung mittels Bestimmens einer und/oder keiner Abstands-, Positions- und/oder Wegstreckenveränderung APWV des Grünflächenbearbeitungsroboters 1 und/oder mittels Magnetfeldmessens MM, insbesondere globalen und/oder lokalen, Positionsbestimmens PB, insbesondere visueller, Odometrie OD und/oder Neigungsmessens NM und/oder inertialer Navigation IN, insbesondere Beschleunigungsmessens BM und/oder Drehratemessens DM, insbesondere mittels der Überwachungseinrichtung 21.

Zudem ist das Bearbeitungswerkzeug 2, insbesondere rotatorisch, bewegbar. Der Schritt b) weist auf: falls das Festhäng-Kriterium FK erfüllt ist, Beenden einer Bewegung des Bearbeitungswerkzeugs 2, wie in Fig. 4 gezeigt. Insbesondere weist der Grünflächenbearbeitungsroboter 1 ein Werkzeugbewegungsantriebssystem 6 auf. Das Werkzeugbewegungsantriebssystem 6 ist zu der Bewegung des Bearbeitungswerkzeugs 2 ausgebildet, insbesondere bewegt. Der Schritt b) weist auf: falls das Festhäng-Kriterium FK erfüllt ist, Beenden eines Betriebs des Werkzeugbewegungsantriebssystems 6.

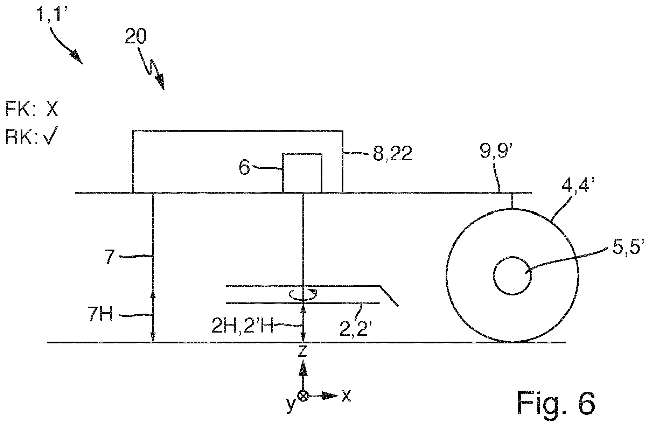

Des Weiteren weist der Schritt b) weist: Betreiben des Fortbewegungsantriebssystems 5 zu der Fortbewegung, insbesondere in abgewandter, insbesondere entgegengesetzter, Fortbewegungsrichtung -x, des Grünflächenbearbeitungsroboters 1, insbesondere zeitlich nach dem Vergrößern der Bearbeitungshöhe 2H, insbesondere und dem Beenden der Bewegung des Bearbeitungswerkzeugs 2, insbesondere dem Beenden des Betriebs des Werkzeugbewegungsantriebssystems 6, wie in Fig. 5 gezeigt. Insbesondere weist das Verfahren den Schritt auf: zeitlich nach dem Schritt b) Verkleinern der Bearbeitungshöhe 2H, insbesondere mittels der Höhenverstellungseinrichtung 22, insbesondere und Beginnen der Bewegung des Bearbeitungswerkzeugs 2, insbesondere Beginnen des Betriebs des Werkzeugbewegungsantriebssystems 6, insbesondere falls ein Rückfall-Kriterium RK erfüllt ist, wie in Fig. 6 gezeigt.

Außerdem weist der Grünflächenbearbeitungsroboter 1 eine Schutzeinrichtung 7 auf. Die Schutzeinrichtung 7 ist zu einem Schutz vor einem Eingriff in das Bearbeitungswerkzeug 2 ausgebildet. Die Schutzeinrichtung 7 weist das Berührungsteil 3b auf, insbesondere ist das Berührungsteil 3b. Zusätzlich oder alternativ ist eine Schutzhöhe 7H der Schutzeinrichtung 7 verstellbar. Der Schritt b) weist auf: falls das Festhäng-Kriterium FK erfüllt ist, Vergrößern der Schutzhöhe 7H, insbesondere mittels der Höhenverstellungseinrichtung 22, wie in Fig. 4 gezeigt. Insbesondere weist das Verfahren den Schritt auf: zeitlich nach dem Schritt b) Verkleinern der Schutzhöhe 7H, insbesondere mittels der Höhenverstellungseinrichtung 22, wie in Fig. 6 gezeigt.

Im Detail sind/ist die Bearbeitungshöhe 2H und/oder die Schutzhöhe 7H in einem Bereich von 0 cm, insbesondere 2,5 cm, insbesondere 5 cm, bis 20 cm, insbesondere 15 cm, insbesondere 10 cm, verstellbar.

Weiter ist der Grünflächenbearbeitungsroboter 1 derart ausgebildet, dass das Verstellen der Bearbeitungshöhe 2H und/oder der Schutzhöhe 7H unabhängig von dem Fortbewegen des Grünflächenbearbeitungsroboters 1 ist. Insbesondere weist der Grünflächenbearbeitungsroboter 1 ein Höhenverstellungsantriebssystem 8 auf. Das Höhenverstellungsantriebssystem 8 ist zu der Verstellung der Bearbeitungshöhe 2H und/oder der Schutzhöhe 7H ausgebildet, insbesondere verstellt. Das Höhenverstellungsantriebssystem 8 ist von dem Fortbewegungsantriebssystem 5 unabhängig.

Zudem sind/ist das Berührungsteil 3b und/oder die Schutzeinrichtung 7 vor dem Bearbeitungswerkzeug 2 angeordnet.

Des Weiteren weist der Grünflächenbearbeitungsroboter 1 ein Fortbewegungsgestell 9, insbesondere ein Fahrgestell 9', und/oder eine Abdeckhaube 10 auf. Insbesondere sind/ist das Fortbewegungsgestell 9 und/oder die Abdeckhaube 10 oberhalb des Berührungsteils 3a, 3b und/oder des Bearbeitungswerkzeugs 2 und/oder der Schutzeinrichtung 7 angeordnet. Die Bearbeitungshöhe 2H und/oder die Schutzhöhe 7H sind/ist gegenüber dem Fortbewegungsgestell 9 und/oder der Abdeckhaube 10 verstellbar. Zusätzlich oder alternativ sind/ist das Fortbewegungsgestell 9 und/oder die Abdeckhaube 10 von dem Berührungsteil 3a, 3b verschieden.

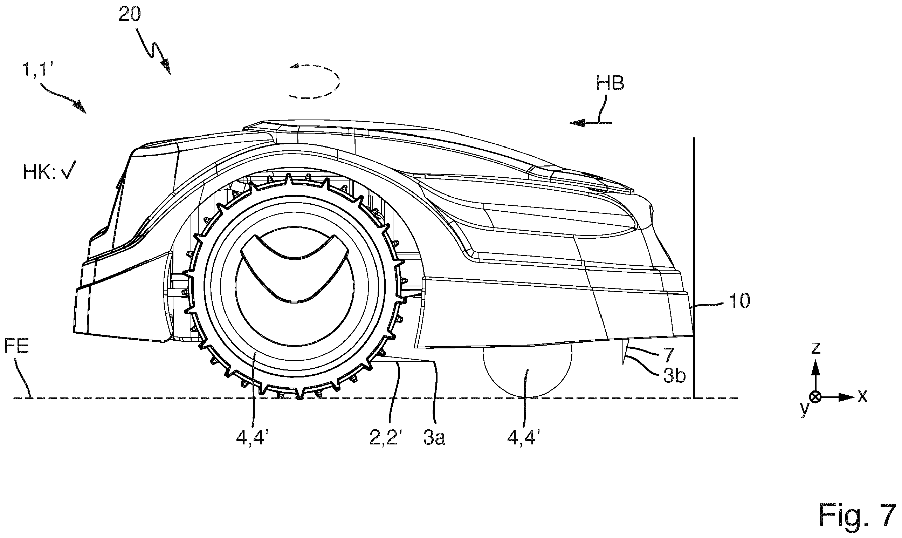

Außerdem ist die Abdeckhaube 10 zu einer Haubenbewegung HB verursacht durch die Fortbewegung und eine Haubenberührung ausgebildet und gegenüber dem Fortbewegungswerk 4 beweglich gelagert. Das Verfahren weist die Schritte auf: Überwachen, ob ein Haubenbewegungs-Kriterium HK erfüllt ist, insbesondere mittels der Überwachungseinrichtung 21. Das Haubenbewegungs-Kriterium HK ist, dass die Haubenbewegung HB verursacht wird, wie in Fig. 7 gezeigt. Falls das Haubenbewegungs-Kriterium HK erfüllt ist, Fortbewegen des Grünflächenbearbeitungsroboters 1 in abgewandter, insbesondere entgegengesetzter, Fortbewegungsrichtung -x, insbesondere und nicht Vergrößern der Bearbeitungshöhe 2H.

Im Detail ist der Grünflächenbearbeitungsroboter 1 ein Rasenmähroboter 1'. Zusätzlich oder alternativ weist das Bearbeitungswerkzeug 2 ein Rasenmähwerkzeug 2' auf, insbesondere ist das Rasenmähwerkzeug 2'. Weiter zusätzlich oder alternativ ist die Bearbeitungshöhe 2H eine Rasenmähhöhe 2'H.

Wie die gezeigten und oben erläuterten Ausführungsbeispiele deutlich machen, stellt die Erfindung ein vorteilhaftes Verfahren und ein vorteilhaftes System, insbesondere jeweils, zum Betreiben eines autonomen mobilen Grünflächenbearbeitungsroboters bereit, das verbesserte Eigenschaften aufweist.

## Patentansprüche

1. Verfahren zum Betreiben eines autonomen mobilen Grünflächenbearbeitungsroboters (1), wobei der Grünflächenbearbeitungsroboter (1) ein Bearbeitungswerkzeug (2) aufweist, wobei eine Bearbeitungshöhe (2H) des Bearbeitungswerkzeugs (2) verstellbar ist, wobei das Verfahren die Schritte aufweist:
a) Überwachen, ob ein Festhäng-Kriterium (FK) erfüllt ist, wobei das Festhäng-Kriterium (FK) für ein Festhängen, insbesondere eines Berührungsteils (3a, 3b), insbesondere des Bearbeitungswerkzeugs (2), des Grünflächenbearbeitungsroboters (1) charakteristisch ist, und
b) falls das Festhäng-Kriterium (FK) erfüllt ist, Vergrößern der Bearbeitungshöhe (2H).

2. Verfahren nach dem vorhergehenden Anspruch,
- wobei der Grünflächenbearbeitungsroboter (1) ein Fortbewegungswerk (4), insbesondere ein Fahrwerk (4'), aufweist, wobei das Fortbewegungswerk (4) zu einer Fortbewegung, insbesondere einer Fahrbewegung, des Grünflächenbearbeitungsroboters (1) ausgebildet ist,
- wobei das Berührungsteil (3a, 3b) zu einer Überwachungsbewegung (UB) verursacht durch die Fortbewegung und das Festhängen ausgebildet und gegenüber dem Fortbewegungswerk (4) beweglich gelagert ist, und
- wobei das Festhäng-Kriterium (FK) ist, dass die Überwachungsbewegung (UB) verursacht wird.

3. Verfahren nach einem der vorhergehenden Ansprüche,
- wobei der Grünflächenbearbeitungsroboter (1) ein Fortbewegungsantriebssystem (5), insbesondere ein Fahrantriebssystem (5'), aufweist, wobei das Fortbewegungsantriebssystem (5) zu einer Fortbewegung, insbesondere einer Fahrbewegung, des Grünflächenbearbeitungsroboters (1) ausgebildet ist, und
- wobei das Festhäng-Kriterium (FK) ist, dass trotz Betriebs des Fortbewegungsantriebssystems (5) der Grünflächenbearbeitungsroboter (1) sich nicht wie bei Nicht-Festhängen, insbesondere gar nicht, fortbewegt, insbesondere fährt.

4. Verfahren nach dem vorhergehenden Anspruch,
- wobei das Überwachen aufweist: Erfassen der Fortbewegung mittels Bestimmens einer Abstands-, Positions- und/oder Wegstreckenveränderung (APWV) des Grünflächenbearbeitungsroboters (1) und/oder mittels Magnetfeldmessens (MM), insbesondere globalen und/oder lokalen, Positionsbestimmens (PB), insbesondere visueller, Odometrie (OD) und/oder Neigungsmessens (NM) und/oder inertialer Navigation (IN), insbesondere Beschleunigungsmessens (BM) und/oder Drehratemessens (DM).

5. Verfahren nach einem der vorhergehenden Ansprüche,
- wobei das Bearbeitungswerkzeug (2), insbesondere rotatorisch, bewegbar ist, wobei der Schritt b) aufweist: falls das Festhäng-Kriterium (FK) erfüllt ist, Beenden einer Bewegung des Bearbeitungswerkzeugs (2),
- insbesondere wobei der Grünflächenbearbeitungsroboter (1) ein Werkzeugbewegungsantriebssystem (6) aufweist, wobei das Werkzeugbewegungsantriebssystem (6) zu der Bewegung des Bearbeitungswerkzeugs (2) ausgebildet ist, und wobei der Schritt b) aufweist: falls das Festhäng-Kriterium (FK) erfüllt ist, Beenden eines Betriebs des Werkzeugbewegungsantriebssystems (6).

6. Verfahren nach einem der vorhergehenden Ansprüche, insbesondere dem vorhergehenden Anspruch,
- wobei der Grünflächenbearbeitungsroboter (1) ein Fortbewegungsantriebssystem (5), insbesondere ein Fahrantriebssystem (5'), aufweist, wobei das Fortbewegungsantriebssystem (5) zu einer Fortbewegung, insbesondere einer Fahrbewegung, des Grünflächenbearbeitungsroboters (1) ausgebildet ist, und
- wobei der Schritt b) aufweist: Betreiben des Fortbewegungsantriebssystems (5) zu der Fortbewegung, insbesondere in abgewandter, insbesondere entgegengesetzter, Fortbewegungsrichtung (-x), des Grünflächenbearbeitungsroboters (1), insbesondere zeitlich nach dem Vergrößern der Bearbeitungshöhe (2H), insbesondere und dem Beenden der Bewegung des Bearbeitungswerkzeugs (2), insbesondere dem Beenden des Betriebs des Werkzeugbewegungsantriebssystems (6),
- insbesondere und wobei das Verfahren den Schritt aufweist: zeitlich nach dem Schritt b) Verkleinern der Bearbeitungshöhe (2H), insbesondere und Beginnen der Bewegung des Bearbeitungswerkzeugs (2), insbesondere Beginnen des Betriebs des Werkzeugbewegungsantriebssystems (6), insbesondere falls ein Rückfall-Kriterium (RK) erfüllt ist.

7. Verfahren nach einem der vorhergehenden Ansprüche, insbesondere dem vorhergehenden Anspruch,
- wobei der Grünflächenbearbeitungsroboter (1) eine Schutzeinrichtung (7) aufweist, wobei die Schutzeinrichtung (7) zu einem Schutz vor einem Eingriff in das Bearbeitungswerkzeug (2) ausgebildet ist,
- wobei die Schutzeinrichtung (7) das Berührungsteil (3b) aufweist, insbesondere ist, und/oder
- wobei eine Schutzhöhe (7H) der Schutzeinrichtung (7) verstellbar ist, und wobei der Schritt b) aufweist: falls das Festhäng-Kriterium (FK) erfüllt ist, Vergrößern der Schutzhöhe (7H), insbesondere und wobei das Verfahren den Schritt aufweist: zeitlich nach dem Schritt b) Verkleinern der Schutzhöhe (7H).

8. Verfahren nach einem der vorhergehenden Ansprüche, insbesondere dem vorhergehenden Anspruch,
- wobei die Bearbeitungshöhe (2H) und/oder die Schutzhöhe (7H) in einem Bereich von 0 cm, insbesondere 2,5 cm, insbesondere 5 cm, bis 20 cm, insbesondere 15 cm, insbesondere 10 cm, verstellbar sind/ist.

9. Verfahren nach einem der, insbesondere zwei, vorhergehenden Ansprüche,
- wobei der Grünflächenbearbeitungsroboter (1) derart ausgebildet ist, dass das Verstellen der Bearbeitungshöhe (2H) und/oder der Schutzhöhe (7H) unabhängig von einem Fortbewegen des Grünflächenbearbeitungsroboters (1) ist,
- insbesondere wobei der Grünflächenbearbeitungsroboter (1) ein Fortbewegungsantriebssystem (5), insbesondere ein Fahrantriebssystem (5'), aufweist, wobei das Fortbewegungsantriebssystem (5) zu einer Fortbewegung, insbesondere einer Fahrbewegung, des Grünflächenbearbeitungsroboters (1) ausgebildet ist, und wobei der Grünflächenbearbeitungsroboter (1) ein Höhenverstellungsantriebssystem (8) aufweist, wobei das Höhenverstellungsantriebssystem (8) zu einer Verstellung der Bearbeitungshöhe (2H) und/oder der Schutzhöhe (7H) ausgebildet ist, wobei das Höhenverstellungsantriebssystem (8) von dem Fortbewegungsantriebssystem (5) unabhängig ist.

10. Verfahren nach einem der, insbesondere drei, vorhergehenden Ansprüche,
- wobei das Berührungsteil (3b) und/oder die Schutzeinrichtung (7) vor dem Bearbeitungswerkzeug (2) angeordnet sind/ist.

11. Verfahren nach einem der, insbesondere vier, vorhergehenden Ansprüche,
- wobei der Grünflächenbearbeitungsroboter (1) ein Fortbewegungsgestell (9), insbesondere ein Fahrgestell (9'), und/oder eine Abdeckhaube (10) aufweist, insbesondere wobei das Fortbewegungsgestell (9) und/oder die Abdeckhaube (10) oberhalb des Berührungsteils (3a, 3b) und/oder des Bearbeitungswerkzeugs (2) und/oder der Schutzeinrichtung (7) angeordnet sind/ist, und
- wobei die Bearbeitungshöhe (2H) und/oder die Schutzhöhe (7H) gegenüber dem Fortbewegungsgestell (9) und/oder der Abdeckhaube (10) verstellbar sind/ist, und/oder
- wobei das Fortbewegungsgestell (9) und/oder die Abdeckhaube (10) von dem Berührungsteil (3a, 3b) verschieden sind/ist.

12. Verfahren nach einem der vorhergehenden Ansprüche, insbesondere dem vorhergehenden Anspruch,
- wobei der Grünflächenbearbeitungsroboter (1) ein Fortbewegungswerk (4), insbesondere ein Fahrwerk (4'), und eine Abdeckhaube (10) aufweist,
- wobei das Fortbewegungswerk (4) zu einer Fortbewegung, insbesondere einer Fahrbewegung, des Grünflächenbearbeitungsroboters (1) ausgebildet ist, und
- wobei die Abdeckhaube (10) zu einer Haubenbewegung (HB) verursacht durch die Fortbewegung und eine Haubenberührung ausgebildet und gegenüber dem Fortbewegungswerk (4) beweglich gelagert ist,
- wobei das Verfahren die Schritte aufweist:
- Überwachen, ob ein Haubenbewegungs-Kriterium (HK) erfüllt ist, wobei das Haubenbewegungs-Kriterium (HK) ist, dass die Haubenbewegung (HB) verursacht wird, und
- falls das Haubenbewegungs-Kriterium (HK) erfüllt ist, Fortbewegen des Grünflächenbearbeitungsroboters (1) in abgewandter, insbesondere entgegengesetzter, Fortbewegungsrichtung (-x), insbesondere und nicht Vergrößern der Bearbeitungshöhe (2H).

13. Verfahren nach einem der vorhergehenden Ansprüche,
- wobei der Grünflächenbearbeitungsroboter (1) ein Rasenmähroboter (1') ist, und/oder
- wobei das Bearbeitungswerkzeug (2) ein Rasenmähwerkzeug (2') aufweist, insbesondere ist, und/oder
- wobei die Bearbeitungshöhe (2H) eine Rasenmähhöhe (2'H) ist.

14. System (20) zum Betreiben eines autonomen mobilen Grünflächenbearbeitungsroboters (1), wobei der Grünflächenbearbeitungsroboter (1) ein Bearbeitungswerkzeug (2) aufweist, wobei eine Bearbeitungshöhe (2H) des Bearbeitungswerkzeugs (2) verstellbar ist, insbesondere zum Ausführen eines Verfahrens nach einem der vorhergehenden Ansprüche, wobei das System (20) aufweist:
- eine Überwachungseinrichtung (21), wobei die Überwachungseinrichtung (21) zum Überwachen ausgebildet ist, ob ein Festhäng-Kriterium (FK) erfüllt ist, wobei das Festhäng-Kriterium (FK) für ein Festhängen, insbesondere eines Berührungsteils (3a, 3b), insbesondere des Bearbeitungswerkzeugs (2), des Grünflächenbearbeitungsroboters (1) charakteristisch ist, und
- eine Höhenverstellungseinrichtung (22), wobei die Höhenverstellungseinrichtung (22), falls das Festhäng-Kriterium (FK) erfüllt ist, zum Vergrößern der Bearbeitungshöhe (2H) ausgebildet ist,
- insbesondere und den Grünflächenbearbeitungsroboter (1), insbesondere wobei der Grünflächenbearbeitungsroboter (1) die Überwachungseinrichtung (21) und/oder die Höhenverstellungseinrichtung (22) aufweist.
